**Europäisches Patentamt**

**European Patent Office**

**Office européen des brevets**

(19)

(11) Veröffentlichungsnummer: **0 024 726**
**A1**

(12)

# EUROPÄISCHE PATENTANMELDUNG

(21) Anmeldenummer: **80105098.0**

(22) Anmeldetag: **27.08.80**

(51) Int. Cl.³: **F 16 D 43/286**

(30) Priorität: **30.08.79 PL 218067**

(43) Veröffentlichungstag der Anmeldung:
**11.03.81 Patentblatt 81/10**

(84) Benannte Vertragsstaaten:
**AT CH DE FR GB IT LI SE**

(71) Anmelder: **Politechnika Poznanska**
**pl.M.Sklodowskiej-Curie 5**
**Poznan(PL)**

(72) Erfinder: **Michalak, Boleslaw**
**Os. Manifestu Lipcowego 25/10**
**Poznan(PL)**

(72) Erfinder: **Michalak, Jadwiga**
**Os. Manifestu Lipcowego 25/10**
**Poznan(PL)**

(72) Erfinder: **Auguscinski, Andrzej**
**ul. Palacza 18**
**Poznan(PL)**

(74) Vertreter: **Lehn, Werner et al,**
**Hoffmann, Eitle & Partner Patentanwälte**
**Arabellastrasse 4 (Sternhaus)**
**D-8000 München 81(DE)**

(54) **Hydraulisch oder pneumatisch ein- und ausrückbare Reibscheibenkupplung.**

(57) Diese Kupplung besteht aus einer Nabe (1), an welcher Reibscheibenpaare (3a,3b) befestigt sind, und aus einem Gehäuse (2), in welchem die Nabe (1) drehbar gelagert ist. Die Räume zwischen den Scheiben der Reibscheibenpaare (3a, 3b) bilden Druckkammern, die mit dem Zuflußsystem und Ausflußsystem des Druckmediums verbunden sind. Das Ausflußsystem hat einen größeren Strömungswiderstand als das Zuflußsystem.

Um ein automatisches Ausrücken der Kupplung bei Überlast ohne verschiebbare Steuerglieder zu ermöglichen, weist zumindest eine Reibscheibe (3a) eine Durchflußöffnung (7) auf. Diese Durchflußöffnung (7) und eine Ausflußöffnung (6) im Gehäuse (2) sind so angeordnet, daß sie sich überlappen können. Die Kupplung wirkt als Überlastkupplung und löst bei Überlast im Druckmedium einen Druckimpuls aus, welcher in Regelsystemen ausgenützt werden kann.

./...

Fig.2

## Hydraulisch oder pneumatisch ein- und ausrückbare Reibscheibenkupplung

Die Erfindung bezieht sich auf eine hydraulisch oder pneumatisch ein- und ausrückbare Reibscheibenkupplung, bestehend aus einer Nabe, an welcher federnde Reibscheiben hermetisch dichtend befestigt sind, und aus einem Gehäuse, in dem die Nabe drehbar gelagert ist und das eine Arbeitskammer aufweist, in der die Reibscheiben angeordnet sind und an deren Seitenwänden Reibflächen und Ausflußöffnungen des Druckmediums vorhanden sind, wobei die Zuflußleitung des Druckmediums mit dem Raum zwischen den Reibscheiben in Verbindung steht und die Entfernungen zwischen den Umfangsrändern der Reibscheiben und der zylindrischen Wand der Arbeitskammer so gewählt sind, daß beim Betrieb der Kupplung der Strömungswiderstand des Druckmediums an diesen Umfangsrändern größer ist als der Strömungswiderstand in der Zuflußleitung.

Derartige Kupplungen, die nur ein Paar von Reibscheiben enthalten, sind aus der französischen Patentschrift Nr. 1 222 083 und der deutschen Offenlegungsschrift Nr. 1 952 428 bekannt. Sie zeichnen sich durch gute Leistung aus. Im entkuppelten Zustand ist bei diesen Kupplungen die mechanische Reibung fast vollständig beseitigt, wodurch die Temperatur der arbeitenden Kupplung sehr niedrig ist. Außerdem zeichnen sich diese Kupplungen durch schnelles Ein- und Ausrücken und große Beständigkeit der sich reibenden Teile aus. Sie weisen auch keine verschiebbaren Steuerglieder auf, welche in anderen Reibscheibenkupplungen vorhanden sind. Ein Nachteil der bekannten Kupplungen der eingangs erwähnten Art beruht darauf, daß sie sich bei Überlastung nicht selbsttätig entkuppeln. In der Technik ist es öfters erforderlich, Überlastkupplungen anzuwenden, welche bei Überschreitung einer bestimmten Belastung den Antrieb von den angetriebenen Mechanismen abschalten.

Bei bekannten Überlastkupplungen wird das Drehmoment, bei dessen Überschreitung sich die Kupplung selbsttätig entkuppeln soll, direkt an den Bauteilen dieser Kupplungen eingestellt, zum Beispiel durch Spannen der in der Kupplung eingebauten Feder bzw. Federn. Diese einstellbaren Überlastkupplungen weisen verschiebbare Steuerglieder auf und lassen sich meist nur im Stillstand einstellen.

Der Erfindung liegt die Aufgabe zugrunde, eine bei Überlastung automatisch entkuppelnde Reibscheibenkupplung zu schaffen, welche hydraulisch oder pneumatisch während des Betriebes gesteuert werden kann und welche keine verschiebbaren Steuerglieder enthält.

Diese Aufgabe wird erfindungsgemäß dadurch gelöst, daß die Kupplung der eingangs erwähnten Art zumindest in einer Reibscheibe wenigstens eine Durchflußöffnung aufweist, wobei die Durchflußöffnung und eine Ausflußöffnung in der Arbeitskammer derart angeordnet sind, daß sie sich während des Betriebes der Kupplung wenigstens teilweise überlappen können.

Gemäß der Erfindung ist es weiterhin möglich, eine bei Überlastung automatisch ausrückende Reibscheibenkupplung mit mehreren Reibscheibenpaaren zu schaffen. In dieser Kupplung ist die Arbeitskammer durch Trennwände in mehrere Kammern unterteilt, in welchen je ein Reibscheibenpaar angeordnet ist, wobei die Räume zwischen den äußeren seitlichen Oberflächen jedes Reibscheibenpaares und den Trennwänden mit einer Ausflußöffnung des Druckmediums verbunden sind.

Bei einer solchen mehrere Reibscheibenpaare aufweisenden Reibscheibenkupplung können die den einzelnen Reibscheibenpaaren zugeordneten Teile der Kupplung als separate Baugruppen bzw. Segmente gefertigt werden, die dann gemäß den Anforderungen zusammengebaut werden können.

Im Vergleich mit den bekannten hydraulischen, pneumatischen oder mechanischen Kupplungen weist die erfindungsgemäße Kupplung wesentliche Vorteile auf. Sie enthält keine verschiebbaren Teile und Steuerglieder. Deshalb kann das Nenndrehmoment, bei welchem die Kupplung ausschalten soll, ohne Auswechseln ihrer Bestandteile oder Änderung ihrer Position bzw. Einstellung eingestellt werden. Da die Steuerung der erfindungsgemäßen Kupplung durch Einstellung des Druckes des Druckmediums erfolgt ist die Kupplung sofort nach der bei Überlastung auftretenden selbsttätigen Entkupplung zum weiteren Einrücken bereit. Beim selbsttätigen Ausrücken der Kupplung entsteht im Medium ein Druckimpuls, der als Signal der Überlastung und auch als Impuls für beliebige automatische Regelungs- bzw. Steuerungssysteme verwendet werden kann.

Die Erfindung ist im folgenden anhand von zwei Ausführungsbeispielen näher erläutert, welche in der Zeichnung dargestellt sind. Es zeigen:

Fig. 1 ein erstes Ausführungsbeispiel der erfindungsgemäßen Kupplung im Axialschnitt, und
Fig. 2 ein zweites Ausführungsbeispiel der erfindungsgemäßen Kupplung im Axialschnitt.

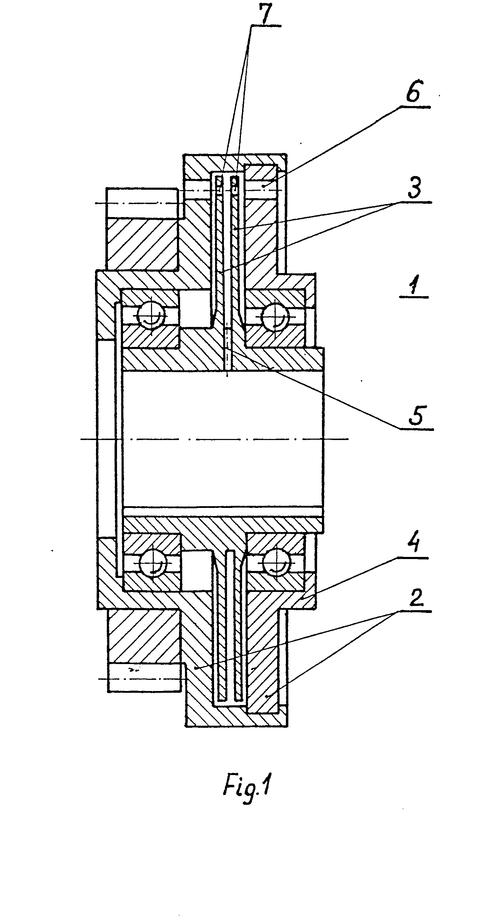

Bei der in Fig. 1 dargestellten Kupplung ist eine Nabe 1 in einem Gehäuse 2 drehbar gelagert. Die Nabe weist ein Paar federnder Reibscheiben 3 auf, welche in einer Arbeitskammer 4 des Gehäuses 2 angeordnet sind. Die Nabe 1 weist eine radiale Zuflußleitung 5 auf, durch die das Druckmedium vom zentralen Kanal, welcher sich entlang der Nabenachse erstreckt, zwischen die Reibscheiben des Reibscheibenpaares 3 geleitet wird. In den Seitenwänden der Arbeitskammer 4 sind Ausflußöffnungen 6 für das Druckmedium vorgesehen. Die Reibscheiben weisen Durchflußöffnungen 7 auf. Es ist unentbehrlich, daß sich während einer Umdrehung des Reibscheibenpaares 3 im Gehäuse 2 die Durchflußöffnungen 7 mit den Ausflußöffnungen 6 mindestens teilweise überlappen können. Deswegen sind die radialen Abstände dieser Öffnungen von der Kupplungsachse grundsätzlich einander gleich.

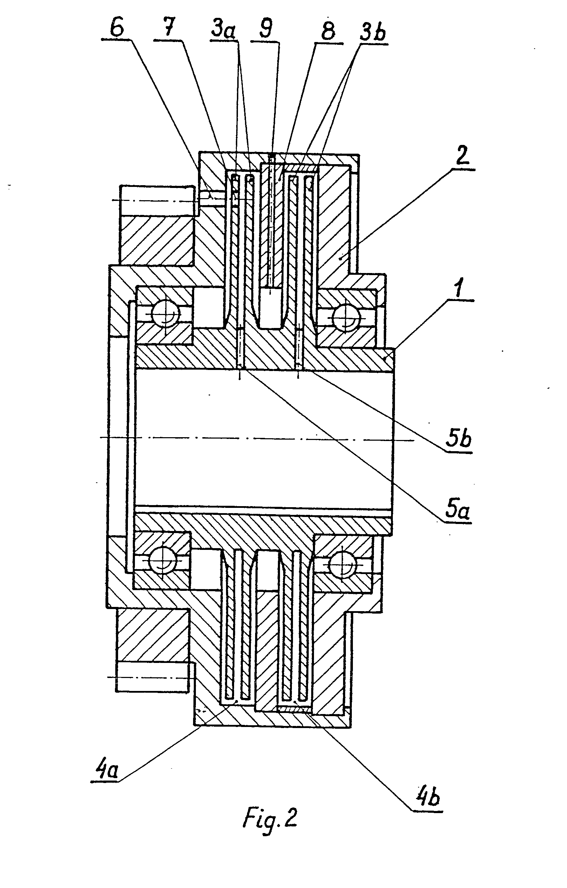

Bei dem in Fig. 2 dargestellten Ausführungsbeispiel der Kupplung weist die drehbar im Gehäuse 2 gelagerte Nabe 1 zwei Reibscheibenpaare 3a und 3b auf. Das Reibscheibenpaar 3a ist in einer Kammer 4a und das Reibscheibenpaar 3b in einer Kammer 4b angeordnet. Zwischen diesen Kammern 4a und 4b ist im Gehäuse eine Trennwand 8 eingebaut. Die Nabe 1 weist radiale Zuflußleitungen 5a und 5b auf, durch welche das Druckmedium vom zentralen Kanal zwischen die Reibscheiben der einzelnen Reibscheibenpaare 3a, 3b geleitet wird. In der Trennwand 8 befindet sich eine Ausflußleitung 9. In einer Seitenwand der Kammer 4a ist eine Ausflußöffnung 6 vorgesehen. Die zu dieser Wand gerichtete Reibscheibe weist eine Durchflußöffnung 7 auf, welche sich während einer Umdrehung der Nabe 1 mit der Ausflußöffnung 6 überlappen kann.

Bei den in den Figuren 1 und 2 dargestellten Ausführungsbeispielen der erfindungsgemäßen Kupplungen können die Nabe 1 und das Gehäuse 2 beliebig als antreibender bzw. als angetriebener Teil der Kupplung verwendet werden.

Die Kupplungen wirken folgendermaßen:
Um die Kupplung einzurücken, wird das Druckmedium durch die Zuflußleitungen 5 bzw. 5a, 5b in die Räume zwischen den Reibscheiben jedes Reibscheibenpaares 3 bzw. 3a, 3b geleitet. Wegen des Strömungswiderstandes beim Durchfluß des Druckmediums zwischen dem Umfangsrand jeder Reibscheibe und der zylindrischen Wand der Arbeitskammer 4 bzw. 4a, 4b ist der Druck zwischen den Reibscheiben jedes Reibscheibenpaares 3 bzw. 3a, 3b größer als an ihren äußeren seitlichen Oberflächen, welche zu den Seitenwänden bzw. Trennwänden der Arbeitskammer 4 bzw. 4a, 4b gewandt sind. Die Reibscheiben werden deswegen an die Seitenwände bzw. Trennwände der Arbeitskammer 4 bzw. 4a, 4b gedrückt. Dadurch wird die Kupplung eingerückt. Das durch die Kupplung übertragbare Drehmoment hängt von der Größe des Mediumdruckes ab. Nach dem Andrücken der Reibscheiben 3 bzw. 3a, 3b an die Seitenwände bzw. Trennwände der Arbeitskammer 4 bzw. 4a, 4b wird die Fördermenge der Pumpe begrenzt, und zwar auf einen Wert, welcher zur Deckung der Leckage bei dem gegebenem Druck nötig ist. Bei Überlastung der Kupplung gleiten die Reibscheiben auf den Reibflächen der Seitenwände bzw. Trennwände der Arbeitskammer 4 bzw. 4b. Dadurch kommen die Öffnungen 6 und 7 zur Überlappung. Das Druckmedium fließt aus dem Raum zwischen den Reibscheiben des Reibscheibenpaares 3 bzw. 3a heraus. Der Druck zwischen allen Reibscheiben wird dadurch herabgesetzt. Die begrenzte Fördermenge des Druckmediums reicht zum Aufrechterhalten des zum Kuppeln erforderlichen Druckes nicht mehr aus. Die federnden Reibscheiben werden in ihre Ruhelage zurückgebogen, wodurch die Kupplung entkuppelt wird. Das Druckmedium, welches sich zwischen den Reibscheiben 3b befand, fließt durch die Ausflußleitung 9 heraus. Durch dieselbe Ausflußleitung 9 fließt auch beim nächsten Kuppeln das Medium heraus, welches sich zwischen der Trennwand 8 und den Reibscheiben 3a und 3b befindet.

Die Steuerung der erfindungsgemäßen Kupplung (Einschalten, Ausschalten und Begrenzen der Fördermenge des Druckmediums) kann von Hand mittels eines geeigneten hydraulischen oder pneumatischen Steuerventils bzw. Verteilers oder einer Drossel durchgeführt werden, mit welchen die Kupplung an die Leitungen angeschlossen werden kann, durch welche das Druckmedium mit entsprechend hohem Druck und in der gewählten Fördermenge fließt. Die erfindungsgemäße Kupplung kann auch in automatisch geregelte Systeme eingebaut werden, in denen der Druckimpuls, welcher bei der Überlappung der Öffnungen 6 und 7 entsteht, zur Umsteuerung der Kupplung und/oder anderer Elemente des Systemes ausgenützt werden.

Patentansprüche:

1. Hydraulisch oder pneumatisch ein- und ausrückbare Reibscheibenkupplung, bestehend aus einer Nabe (1), an welcher federnde Reibscheiben (3, 3a, 3b) hermetisch dichtend befestigt sind, und aus einem Gehäuse (2), in dem die Nabe (1) drehbar gelagert ist und das eine Arbeitskammer (4) aufweist, in der die Reibscheiben (3, 3a, 3b) angeordet sind und an deren Seitenwänden Reibflächen und Ausflußöffnungen (6) des Druckmediums vorgesehen sind, wobei die Zuflußleitung des Druckmediums mit dem Raum zwischen den Reibscheiben (3, 3a, 3b) in Verbindung steht und die Entfernungen zwischen den Umfangsrändern der Reibscheiben (3, 3a, 3b) und der zylindrischen Wand der Arbeitskammer (4) so gewählt sind, daß beim Betrieb der Kupplung der Strömungswiderstand des Druckmediums an diesen Umfangsrändern größer ist als der Strömungswiderstand in der Zuflußleitung (5, 5a, 5b), dadurch g e k e n n z e i c h n e t, daß zumindest eine Reibscheibe (3, 3a) wenigstens eine Durchflußöffnung (7) aufweist, wobei die Durchflußöffnung (7) und eine Ausflußöffnung (6) in der Arbeitskammer (4) derart angeordnet sind, daß sie sich während des Betriebes der Kupplung wenigstens teilweise überlappen können.

2. Hydraulisch oder pneumatisch ein- und ausrückbare Reibscheibenkupplung nach Patentanspruch 1, dadurch g e k e n n z e i c h n e t, daß ihre Arbeitskammer (4) durch Trennwände (8) in mehrere Kammern (4a, 4b) unterteilt ist, in welchen je ein Reibscheibenpaar (3a, 3b) angeordnet ist, wobei die Räume zwischen den äußeren seitlichen Oberflächen jedes Reibscheibenpaares (3a, 3b) und den Trennwänden (8) mit einer Ausflußleitung (9) des Druckmediums verbunden sind.

Fig.1

0024726

Fig.2

Europäisches
Patentamt

**EUROPÄISCHER RECHERCHENBERICHT**

| | **EINSCHLÄGIGE DOKUMENTE** | | | **KLASSIFIKATION DER ANMELDUNG (Int. Cl.¹)** |
|---|---|---|---|---|
| Kategorie | Kennzeichnung des Dokuments mit Angabe, soweit erforderlich, der maßgeblichen Teile | | betrifft Anspruch | |
| | <u>DE - C - 732 449</u> (MÜLLER) <br> * Insgesamt * | | 1 | F 16 D 43/286 |
| | <u>GB - A - 726 586</u> (GENERAL ELEC-TRIC) <br> * Seite 4, Figur 2 * | | 1 | |
| D | <u>DE - A - 1 952 428</u> (ZAKLADY PRZEMYSLU) <br> * Insgesamt * | | 1 | |
| | | | | **RECHERCHIERTE SACHGEBIETE (Int. Cl.³)** |
| | <u>FR - A - 636 250</u> (BOLTSHAUSER) <br> * Insgesamt * | | 2 | F 16 D 43/00 <br> 25/00 |
| A | <u>GB - A - 638 990</u> (HOBBS TRANS-MISSION) | | | |
| A | <u>DE - C - 379 460</u> (BROWN BOVERI) | | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 08-12-1980 | BALDWIN |

EPA form 1503.1   06.78